# EUROPEAN PATENT SPECIFICATION

(11) **EP 3 046 043 B1**
(45) Date of publication and mention of the grant of the patent: **30.08.2023**
(21) Application number: 14853688.1
(22) Date of filing: 17.10.2014
(51) Int. Cl.: G06F 21/44, G06F 21/85

(54) **METHOD AND DEVICE FOR CONTROLLING DEBUG PORT OF TERMINAL DEVICE**
VERFAHREN UND VORRICHTUNG ZUR STEUERUNG EINES FEHLERBESEITUNGSPORTS EINER ENDGERÄTEVORRICHTUNG
PROCÉDÉ ET DISPOSITIF DE COMMANDE DU PORT DE DÉBOGAGE D'UN DISPOSITIF TERMINAL

(30) Priority: 17.10.2013 CN 201310489021
(43) Date of publication of application: 20.07.2016
(73) Proprietor: Huawei Technologies Co., Ltd., Longgang District Shenzhen, Guangdong 518129 (CN)
(72) Inventor: SHEN, Jinhua, Shenzhen Guangdong 518129 (CN)
(74) Representative: Maiwald GmbH
(86) International application number: PCT/CN2014/088833
(87) International publication number: WO 2015/055141

(56) References cited:
- CN-A- 102 331 976
- CN-A- 102 411 692
- CN-A- 103 559 435
- ramdroid77: "AdbToggle", xdadevelopers forum, 26 April 2012 (2012-04-26), XP002759115, Retrieved from the Internet: URL:http://forum.xda-developers.com/showth read.php?t=1560779 [retrieved on 2016-06-22]
- Ronald Ammann: "ADB Toggle", Google Play, 13 January 2014 (2014-01-13), XP002759116, Retrieved from the Internet: URL:https://play.google.com/store/apps/det ails?id=com.ramdroid.adbtoggle [retrieved on 2016-06-22]
- Stericson: "AdbdSecure", GitHub, 3 October 2012 (2012-10-03), XP002759117, Retrieved from the Internet: URL:https://github.com/Stericson/AdbdSecur e [retrieved on 2016-06-22]

## Description

### TECHNICAL FIELD

The present invention relates to the field of communications technologies, and in particular, to a method and an apparatus for controlling a debug port of a terminal device.

### BACKGROUND

In a terminal device such as a smartphone or a tablet computer in which an operating system such as an Andriod system is installed, when a screen of the terminal device is in a locked state, a user cannot access, by means of a direct operation on the terminal device or a connection between a USB (Universal Serial BUS, universal serial bus) port and a computer, user data stored on the terminal device, such as contacts or confidential files. If the user needs to access the user data, the user needs to unlock the screen first. After the unlocking succeeds, the user can access the user data by means of a direct operation on the terminal device. After the unlocking succeeds, if the terminal device is connected to a computer by using a USB port, the user may enable UMS (United Message Service, united message service), MTP (Media Transfer Protocol, Media Transfer Protocol), and PTP (picture transfer protocol, Media Transfer Protocol) modes, so as to access the user data; or may enable a debug port such as an ADB (Andriod Debug Bridge, Android Debug Bridge) port of the terminal device after the user confirms that debugging is authorized and debugging is allowed, so as to access the user data.

If the terminal device is lost, and a third party cracks (root) the terminal device, the third party can access the user data by means of a connection between the terminal device and a computer implemented by using third-party tool software (such as DDMS or 360 Mobile Assistant); in this case, information security of the user cannot be ensured.

Ramdroid77: "DbToggle", xdadevelopers forum XP002759115 describes an APP that allows to toggle the USB debug settings.

### SUMMARY

In view of this, a technical problem to be resolved in the present invention is how to ensure information security of a user.

The present invention is defined by the subject-matter of the independent claims. Additional features of the invention are presented in the dependent claims.

A status of a universal serial bus port port of a terminal device and a status of a screen of the terminal device are detected, and a debug port of the terminal device is controlled according to a detection result. According to the method and apparatus for controlling a debug port in the present invention, security policy completeness of a terminal device can be improved, and security of user information on the terminal device is effectively ensured.

According to detailed descriptions of exemplary embodiments in the following accompanying drawings, other features and aspects of the present invention become clearer.

### BRIEF DESCRIPTION OF DRAWINGS

Accompanying drawings that are included in the specification and that constitute a part of the specification together with the specification illustrate exemplary embodiments, features, and aspects of the present invention, and are used to explain a principle of the present invention.
FIG. 1 shows a flowchart of a method for controlling a debug port according to an embodiment of the present invention;
FIG. 2 shows a flowchart of a method for controlling a debug port according to another embodiment of the present invention;
FIG. 3 shows a block diagram of an apparatus for controlling a debug port according to an embodiment of the present invention; and
FIG. 4 shows a block diagram of an apparatus for controlling a debug port according to another embodiment of the present invention.

### DESCRIPTION OF EMBODIMENTS

The following describes various exemplary embodiments, features, and aspects of the present invention in detail with reference to the accompanying drawings. Same reference signs in the accompanying drawings indicate components that have same or similar functions. Although various aspects of the embodiments are shown in the accompanying drawings, unless otherwise specified, the accompanying drawings do not need to be drawn to scale.

The word "exemplary" for exclusive use herein means "used as an example or embodiment or for a descriptive purpose". Any embodiment described herein for an "exemplary" purpose does not need to be explained as being superior to or better than other embodiments.

In addition, to better describe the present invention, many specific details are provided in the following specific implementation manners. A person skilled in the art should understand that the present invention can still be implemented without these specific details. In some other instances, well-known methods, means, components, and circuits are not described in detail, so that a main purpose of the present invention is highlighted.

### Embodiment 1

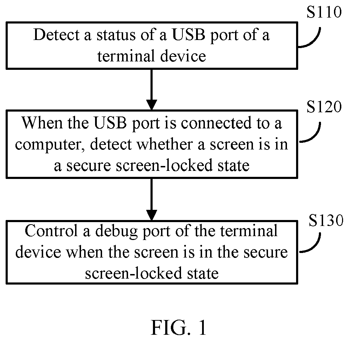

FIG. 1 shows a flowchart of a method for controlling a debug port of a terminal device according to an embodiment of the present invention. As shown in FIG. 1, the method for controlling a debug port mainly includes:
Step S 110: Detect a status of a universal serial bus USB port of a terminal device.
Step S120: When the USB port is connected to a computer, detect whether a screen of the terminal device is in a secure screen-locked state.
Step S130: Control a debug port of the terminal device when the screen is in the secure screen-locked state.

Specifically, on the device such as a smartphone or a tablet computer in which an operating system such as an Andriod system is installed, a set of security policies may be added before the debug port such as an ADB (Andriod Debug Bridge) port of the terminal device. The system may determine, by listening to a USB message of the terminal device, for example, a message indicating whether a USB port of the terminal device is connected to the computer by means of USB cable insertion, whether a USB event happens. If it is detected that the USB port is connected to the computer, it is determined that the USB event happens. In addition, it is further detected whether the screen of the terminal device is in the secure screen-locked state, and enabling or disabling of the debug port is controlled according to a detection result. The secure screen-locked state is preset in the operating system of the terminal device, and the screen that is locked can be successfully unlocked only after a user inputs correct unlocking information on the screen. The debug port can be enabled only in a case in which the screen is successfully unlocked, and the user is prompted to confirm whether to authorize debugging and whether to allow debugging. The ADB port is a debug port of the Andriod system, and in a case in which the USB (Universal Serial Bus, universal serial bus) port is connected to the computer, the user manages the terminal device by using the port and accesses user data stored on the terminal device, such as contacts or confidential files.

If the terminal device is lost, even though a third party cracks the terminal device by using third-party tool software, the third party still cannot steal the user data by using the debug port because after the USB port of the terminal device is connected to the computer, if security policy verification fails, the debug port is disabled by using the method for controlling a debug port.

A status of a USB port of a terminal device and a status of a screen of the terminal device are detected, and a debug port of the terminal device is controlled according to a detection result. According to the method for controlling a debug port in the foregoing embodiment of the present invention, security policy completeness of a terminal device can be improved, and security of user information on the terminal device is effectively ensured.

It should be noted that although the Android system is used as an example for describing the foregoing method for controlling a debug port, a person skilled in the art can understand that the present invention shall not be limited thereto. Actually, the foregoing method for controlling a debug port is also applicable to another operating system having a debug port, such as a WinPhone system.

### Embodiment 2

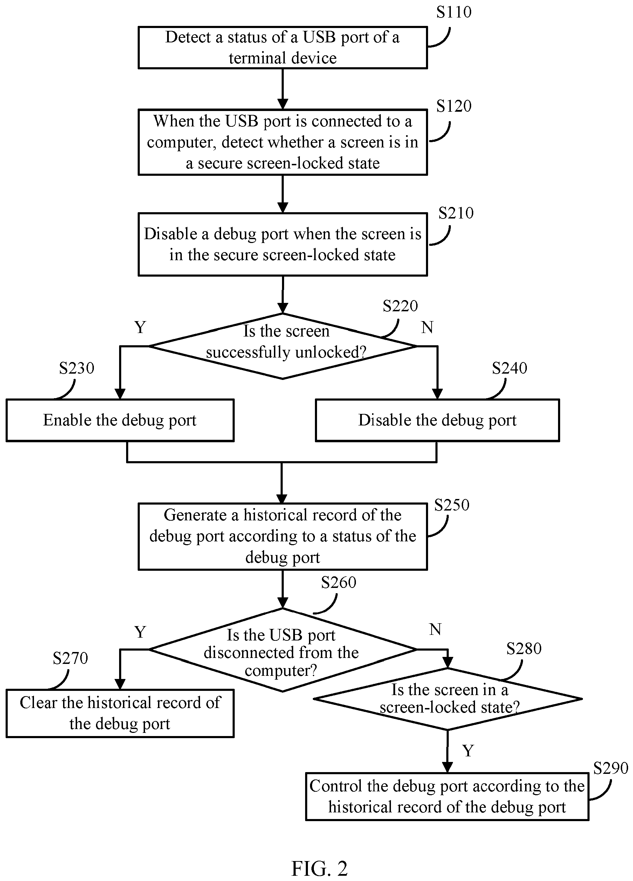

FIG. 2 shows a flowchart of a method for controlling a debug port of a terminal device according to another embodiment of the present invention. In FIG. 2, a component of which a mark is the same as that of a component in FIG. 1 has a same function. For brevity, detailed descriptions of these components are omitted.

As shown in FIG. 2, a primary difference between the method shown in FIG. 2 and the method shown in FIG. 1 lies in that: when a screen is in a secure screen-locked state, a debug port is first disabled, and the debug port can be enabled only after the screen is successfully unlocked.

Specifically, step S130 may specifically include:
Step S210: Disable the debug port when the screen is in the secure screen-locked state.

Specifically, a screen-locked state refers to a state in which a screen of a terminal device is locked. The screen-locked state may include a secure screen-locked state and an insecure screen-locked state. For example, in the version of Andriod J, a secure screen-locked state may include but is not limited to any one or more of a pattern (Pattern) screen lock, a PIN (Personal Identification Number, personal identification number) screen lock, a password (Password) screen lock, and a face lock (face lock); and an insecure screen-locked state may include a 2D screen lock (for example, a slide screen lock), no screen lock, and the like. Compared with the insecure screen-locked state, for the secure screen-locked state, an unlocking manner is more complex. A user needs to input unlocking information on a locked screen, and the screen can be successfully unlocked only after the unlocking information is verified to be correct; therefore, compared with the insecure screen-locked state, the secure screen-locked state has a higher security level. If the user sets a screen-locked state of the terminal device to be in the secure screen-locked state, it indicates that the user expects to protect security of user information stored on the terminal device and needs to prevent a third party from stealing the information.

If the terminal device is lost, a third party cannot access user data by using the debug port because when the third party connects the USB port of the terminal device to a computer, if it is detected that the screen of the terminal device is in the secure screen-locked state, the debug port can be automatically disabled.

For the foregoing method for controlling a debug port, in a possible implementation manner, after step S220, the method may include:
Step S220: Detect whether the screen is successfully unlocked.
Step S230: Enable the debug port if the screen is successfully unlocked.
Step S240: Disable the debug port if the screen is unsuccessfully unlocked.

Specifically, after it is detected that the screen is in the secure screen-locked state and the debug port is disabled, whether a user inputs unlocking information on the screen can be detected, that is, it is determined that the user has performed an unlock operation and has verified whether the unlocking information is correct. If the unlocking information is verified to be correct, the screen is to be successfully unlocked. For different secure screen-locked states, different manners need to be used for unlocking. For example, if the secure screen-locked state is a pattern (Patten) screen-locked state, unlocking can succeed only after a user draws a correct pattern on the screen; if the secure screen-locked state is a PIN (Personal Identification Number, personal identification number), unlocking can succeed only after a user inputs a correct PIN code on the screen; if the secure screen-locked state is a password (Password) screen-locked state, unlocking can succeed only after a user inputs a correct password on the screen; if the secure screen-locked state is a face screen-locked (face lock) state, unlocking can succeed only after a terminal device identifies a correct face feature of a user. The debug port can be enabled only after the screen is successfully unlocked, or if the screen is unsuccessfully unlocked, the debug port continues to remain in a disabled state.

If the terminal device is lost, the debug port continues to remain in a disabled state because a third party cannot input correct unlocking information generally, that is, unlocking information is verified to be incorrect; therefore, the third party cannot access, by using the debug port, user data stored on the terminal device.

For the foregoing method for controlling a debug port, in a possible implementation manner, after step S230 or step S240, the method may include:
Step S250: Generate a historical record of the debug port according to an enabled state or a disabled state of the debug port.

Specifically, if the screen is successfully unlocked and the debug port is enabled, the debug port is set to be in an enabled state in the historical record of the debug port. If the screen is unsuccessfully unlocked and the debug port is disabled, the debug port is set to be in a disabled state in the historical record of the debug port. Whether the screen is successfully unlocked can be learned according to the historical record of the debug port, and further whether the terminal device may be cracked by a third party is learned.

For the foregoing method for controlling a debug port, in a possible implementation manner, after step S250, the method may include:
Step S260: Detect whether the USB port is disconnected from the computer.
Step S270: Clear the historical record of the debug port when the USB port is disconnected from the computer.
Step S280: When the USB port remains connected to the computer, detect whether the screen is in a screen-locked state.
Step S290: When the screen is in the screen-locked state, control the debug port according to the historical record of the debug port.

Specifically, a system may determine, by listening to a USB message of the terminal device, for example, a message indicating whether a USB port of the terminal device is disconnected from the computer by pulling out a USB cable, whether the USB event ends. If the USB port is disconnected from the computer, it is determined that a current USB event ends, and the historical record of the debug port is cleared. If the USB port remains connected to the computer, it is determined that a current USB event does not end, and the debug port may be enabled or disabled according to the historical record of the debug port, which specifically includes the following cases:
Case 1: If a developer connects the terminal device to a computer by using the debug port, the developer may perform development and debugging on the terminal device after successfully unlocking the screen and enabling the debug port. Afterwards, if the screen is in the screen-locked state again, for example, the terminal device enters a standby state and a screen-locked state because the developer does not operate the terminal device for a long time, and the USB port remains connected to the computer at this time, the debug port can continue to remain in an enabled state. In this way, the developer can continue to use the debug port, thereby avoiding that the developer needs to frequently unlock a screen in a development and debugging process, and improving experience of the developer.
Case 2: If the terminal device is lost, and a third party connects the terminal device to a computer by using the debug port, the third party cannot read, by using the debug port, user data stored on the terminal device because the third party unlocks the screen unsuccessfully and the debug port is disabled. Afterwards, if the screen is in the screen-locked state again and the USB port remains connected to the computer at this time, the debug port can continue to remain in a disabled state, so that the third party still cannot access the user data by using the debug port.

### Embodiment 3

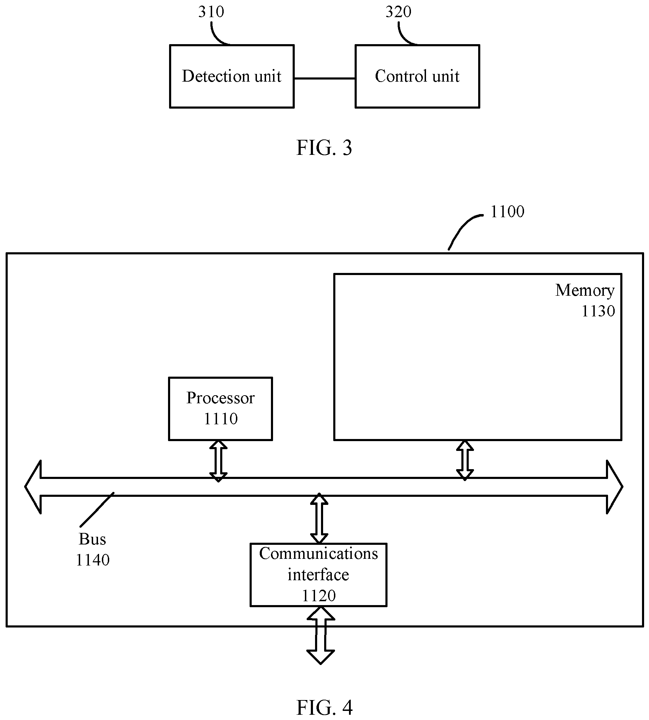

FIG. 3 shows a block diagram of an apparatus for controlling a debug port of a terminal device according to an embodiment of the present invention. As shown in FIG. 3, the apparatus for controlling a debug port mainly includes a detection unit 310 and a control unit 320. The detection unit 310 is mainly configured to: detect a status of a USB port of a terminal device; and when the universal serial bus port is connected to a computer, detect whether a screen of the terminal device is in a secure screen-locked state, where the secure screen-locked state is preset in an operating system of the terminal device, and the screen that is locked can be successfully unlocked only after a user inputs correct unlocking information on the screen. The control unit 320 is connected to the detection unit 310 and mainly configured to control a debug port of the terminal device when the screen is in the secure screen-locked state.

For the foregoing apparatus for controlling a debug port, in a possible implementation manner, when the screen is in the secure screen-locked state, the control unit 320 is further configured to disable the debug port.

For the foregoing apparatus for controlling a debug port, in a possible implementation manner, the detection unit 310 is further configured to detect whether the screen is successfully unlocked; and when the screen is successfully unlocked, the control unit 320 is further configured to enable the modulation port, or when the screen is unsuccessfully unlocked, the control unit 320 is further configured to disable the debug port.

For the foregoing apparatus for controlling a debug port, in a possible implementation manner, the control unit 320 is further configured to generate a historical record of the debug port according to an enabled state or a disabled state of the debug port.

For the foregoing apparatus for controlling a debug port, in a possible implementation manner, the detection unit 310 is further configured to detect whether the USB port is disconnected from the computer; and when the universal serial bus port is disconnected from the computer, the control unit 320 is further configured to clear the historical record of the debug port, or when the universal serial bus port remains connected to the computer, the control unit 320 is further configured to detect whether the screen is in a screen-locked state, and when the screen is in the screen-locked state, the control unit 320 is further configured to control the debug port according to the historical record of the debug port.

For a specific mechanism for the foregoing apparatus for controlling a debug port to be configured to detect a status of a USB port of a terminal device and a status of a screen of the terminal device and control a debug port of the terminal device according to a detection result, reference may be made to FIG. 1, FIG. 2, and related descriptions of FIG. 1 and FIG. 2. According to the apparatus for controlling a debug port in the foregoing embodiment of the present invention, security policy completeness of a terminal device can be improved, and security of user information on the terminal device is effectively ensured.

It should be noted that although an Android system is used as an example for describing the foregoing apparatus for controlling a debug port, a person skilled in the art can understand that the present invention shall not be limited thereto. Actually, the foregoing apparatus for controlling a debug port is also applicable to another operating system having a debug port, such as a WinPhone system.

### Embodiment 4

FIG. 4 shows a block diagram of an apparatus for controlling a debug port according to still another embodiment of the present invention. The apparatus 1100 for controlling a debug port may be a host server with a computing capability, a personal computer PC, or a portable computer or terminal that can be carried, or the like. Specific implementation of a computing node is not limited in a specific embodiment of the present invention.

The apparatus 1100 for controlling a debug port includes a processor (processor) 1110, a communications interface (Communications Interface) 1120, a memory (memory array) 1130, and a bus 1140, where the processor 1110, the communications interface 1120, and the memory 1130 communicate with each other by using the bus 1140.

The communications interface 1120 is configured to communicate with a network device, where the network device includes, for example, a virtual machine management center and a shared memory.

The processor 1110 is configured to execute a program. The processor 1110 may be a central processing unit CPU or an application-specific integrated circuit ASIC (Application Specific Integrated Circuit), or may be configured as one or more integrated circuits for implementing this embodiment of the present invention.

The memory 1130 is configured to store a file. The memory 1130 may include a high-speed RAM memory, and may also include a non-volatile memory (non-volatile memory), for example, at least one magnetic disk memory. The memory 1130 may also be a memory array. The memory 1130 may also be divided into blocks, and the blocks can be combined into a virtual volume according to a specific rule.

For the foregoing apparatus for controlling a debug port, in a possible implementation manner, the foregoing program may be program code including a computer operating instruction. The program may be specifically used for: detecting a status of a universal serial bus USB port of a terminal device; when the universal serial bus port is connected to a computer, detecting whether a screen of the terminal device is in a secure screen-locked state, where the secure screen-locked state is preset in an operating system of the terminal device, and the screen that is locked can be successfully unlocked only after a user inputs correct unlocking information on the screen; and controlling a debug port of the terminal device when the screen is in the secure screen-locked state.

For the foregoing apparatus for controlling a debug port, in a possible implementation manner, the program is further used for: disabling the debug port when the screen is in the secure screen-locked state.

For the foregoing apparatus for controlling a debug port, in a possible implementation manner, the program is further used for: detecting whether the screen is successfully unlocked; and enabling the modulation port when the screen is successfully unlocked, or disabling the debug port when the screen is unsuccessfully unlocked.

For the foregoing apparatus for controlling a debug port, in a possible implementation manner, the program is further used for generating a historical record of the debug port according to an enabled state or a disabled state of the debug port.

For the foregoing apparatus for controlling a debug port, in a possible implementation manner, the program is further used for: after generating the historical record of the debug port, detecting whether the universal serial bus port is disconnected from the computer; and clearing the historical record of the debug port when the universal serial bus port is disconnected from the computer, or when the universal serial bus port remains connected to the computer, detecting whether the screen is in a screen-locked state, and controlling the debug port according to the historical record of the debug port when the screen is in the screen-locked state.

For a specific mechanism for the foregoing apparatus for controlling a debug port to be configured to detect a status of a USB port of a terminal device and a status of a screen of the terminal device and control a debug port of the terminal device according to a detection result, reference may be made to FIG. 1, FIG. 2, and related descriptions of FIG. 1 and FIG. 2. According to the apparatus for controlling a debug port in the foregoing embodiment of the present invention, security policy completeness of a terminal device can be improved, and security of user information on the terminal device is effectively ensured.

It should be noted that although an Android system is used as an example for describing the foregoing apparatus for controlling a debug port, a person skilled in the art can understand that the present invention shall not be limited thereto. Actually, the foregoing apparatus for controlling a debug port is also applicable to another operating system having a debug port, such as a WinPhone system.

A person of ordinary skill in the art may be aware that, exemplary units and algorithm steps in the embodiments described in this specification may be implemented by electronic hardware or a combination of computer software and electronic hardware. Whether the functions are implemented by hardware or software depends on particular applications and design constraint conditions of the technical solutions. A person skilled in the art may select different methods to implement the described functions for a particular application, but it should not be considered that the implementation goes beyond the scope of the present invention.

If the functions are implemented in a form of computer software and sold or used as an independent product, it can be deemed to some extent that all or some of the technical solutions of the present invention (for example, the part contributing to the prior art) are implemented in a form of a computer software product. The computer software product is generally stored in a computer readable storage medium and includes several instructions for instructing a computer device (which may be a personal computer, a server, a network device, or the like) to perform all or some of the steps of the methods described in the embodiments of the present invention. The foregoing storage medium includes: any medium that can store program code, such as a USB flash drive, a removable hard disk, a read-only memory (ROM, Read-Only Memory), a random access memory (RAM, Random Access Memory), a magnetic disk, or an optical disc.

The foregoing descriptions are merely specific implementation manners of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

## Claims

1. A method for controlling a debug port of a terminal device, comprising:
detecting (S110) a status of a universal serial bus port of the terminal device and a status of a screen of the terminal device and controlling the debug port of the terminal device according to a detection result;
when (S120) the universal serial bus port is connected to a computer, detecting whether the terminal device is in a secure screen-locked state, wherein the secure screen-locked state is preset in an operating system of the terminal device, and the screen that is locked can be successfully unlocked only after a user inputs correct unlocking information on the screen; and
controlling (S130) a debug port of the terminal device when the terminal device is in the secure screen-locked state, wherein the controlling a debug port of the terminal device when the terminal device is in the secure screen-locked state comprises:
disabling the debug port when the terminal device is in the secure screen-locked state, wherein after the disabling the debug port when the terminal device is in the secure screen-locked state, the method is **characterized by**:
detecting whether the screen is successfully unlocked after the user inputs correct unlocking information on the screen; and
enabling the debug port when the screen is successfully unlocked, or
disabling the debug port when the screen is unsuccessfully unlocked after the user inputs incorrect unlocking information on the screen, wherein after the enabling the debug port when the screen is successfully unlocked, or disabling the debug port when the screen is unsuccessfully unlocked, the method comprises:
generating a historical record of the debug port according to an enabled state or a disabled state of the debug port;
wherein after the generating a historical record of the debug port, the method comprises:
detecting whether the universal serial bus port is disconnected from the computer; and
clearing the historical record of the debug port when the universal serial bus port is disconnected from the computer,
detecting whether the terminal device is in a screen-locked state when the universal serial bus port remains connected to the computer, and
controlling the debug port according to the historical record of the debug port when the terminal device is in the screen-locked state.

2. An apparatus for controlling a debug port of a terminal device, comprising:
a detection unit (310), configured to detect a status of a universal serial bus port of a terminal device and a status of a screen of the terminal device and configured to control the debug port of the terminal device according to a detection result, wherein
the detection unit (310) is further configured to: when the universal serial bus port is connected to a computer, detect whether the terminal device is in a secure screen-locked state, wherein the secure screen-locked state is preset in an operating system of the terminal device, and the screen that is locked can be successfully unlocked only after a user inputs correct unlocking information on the screen; and
a control unit (320), connected to the detection unit and configured to control a debug port of the terminal device when the terminal device is in the secure screen-locked state 6, wherein when the terminal device is in the secure screen-locked state, the control unit (320) is further configured to disable the debug port, **characterized in that**
the detection unit (310) is further configured to detect whether the screen is successfully unlocked after the user inputs correct unlocking information on the screen; and
when the screen is successfully unlocked, the control unit (320) is further configured to enable the debug port, or
when the screen is unsuccessfully unlocked after the user inputs incorrect unlocking information on the screen, the control unit (320) is further configured to disable the debug port, wherein the control unit (320) is further configured to:
generate a historical record of the debug port according to an enabled state or a disabled state of the debug port;
wherein
the detection unit (310) is further configured to detect whether the universal serial bus port is disconnected from the computer; and
when the universal serial bus port is disconnected from the computer, the control unit (320) is further configured to clear the historical record of the debug port,
when the universal serial bus port remains connected to the computer, the control unit (320) is further configured to detect whether the terminal device is in a screen-locked state, and
when the terminal device is in the screen-locked state, the control unit (320) is further configured to control the debug port according to the historical record of the debug port.

## Patentansprüche

1. Verfahren zum Steuern eines Debug-Ports eines Endgeräts, das Folgendes umfasst:
Erfassen (S110) eines Status eines Ports eines universellen seriellen Busses des Endgeräts und eines Status eines Bildschirms des Endgeräts und Steuern des Debug-Ports des Endgeräts gemäß einem Erfassungsergebnis;
wenn (S120) der Port des universellen seriellen Busses mit einem Computer verbunden ist, Erfassen, ob sich das Endgerät in einem sicheren bildschirmgesperrten Zustand befindet, wobei der sichere bildschirmgesperrte Zustand in einem Betriebssystem des Endgeräts voreingestellt ist, und der Bildschirm, der gesperrt ist, nur dann erfolgreich entsperrt werden kann, wenn ein Benutzer korrekte Entsperrinformationen auf dem Bildschirm eingibt; und
Steuern (S130) eines Debug-Ports des Endgeräts, wenn sich das Endgerät in dem sicheren bildschirmgesperrten Zustand befindet, wobei das Steuern eines Debug-Ports des Endgeräts, wenn sich das Endgerät in dem sicheren bildschirmgesperrten Zustand befindet, Folgendes umfasst:
Deaktivieren des Debug-Ports, wenn sich das Endgerät in dem sicheren bildschirmgesperrten Zustand befindet, wobein nach dem Deaktivieren des Debug-Ports, wenn sich das Endgerät in dem sicheren bildschirmgesperrten Zustand befindet, das Verfahren **gekennzeichnet ist durch** Folgendes:
Erfassen, ob der Bildschirm erfolgreich entsperrt wurde, nachdem der Benutzer korrekte Entsperrinformationen auf dem Bildschirm eingegeben hat; und
Aktivieren des Debug-Ports, wenn der Bildschirm erfolgreich entsperrt wird, oder
Deaktivieren des Debug-Ports, wenn der Bildschirm erfolglos entsperrt wird, nachdem der Benutzer falsche Entsperrinformationen auf dem Bildschirm eingegeben hat, wobei, nach dem Aktivieren des Debug-Ports, wenn der Bildschirm erfolgreich entsperrt wird, oder Deaktivieren des Debug-Ports, wenn der Bildschirm nicht erfolgreich entsperrt wird, das Verfahren Folgendes umfasst:
Erzeugen eines historischen Datensatzes des Debug-Ports gemäß einem aktivierten Zustand oder einem deaktivierten Zustand des Debug-Ports;
wobei, nach dem Erzeugen eines historischen Datensatzes des Debug-Ports, das Verfahren Folgendes umfasst:
Erfassen, ob der Port des universellen seriellen Busses von dem Computer getrennt ist; und
Löschen des historischen Datensatzes des Debug-Ports, wenn der Port des universellen seriellen Busses von dem Computer getrennt ist,
Erfassen, ob sich das Endgerät in einem bildschirmgesperrten Zustand befindet, wenn der Port des universellen seriellen Busses mit dem Computer verbunden bleibt, und
Steuern des Debug-Ports gemäß dem historischen Datensatz des Debug-Ports, wenn sich das Endgerät in dem bildschirmgesperrten Zustand befindet.

2. Einrichtung zum Steuern eines Debug-Ports eines Endgeräts, die Folgendes umfasst:
eine Erfassungseinheit (310), die konfiguriert ist, um einen Status eines Ports des universellen seriellen Busses eines Endgeräts und einen Status eines Bildschirms des Endgeräts zu erfassen, und konfiguriert ist, um den Debug-Port des Endgeräts gemäß einem Erfassungsergebnis zu steuern, wobei
die Erfassungseinheit (310) ferner für Folgendes konfiguriert ist: wenn der Port des universellen seriellen Busses mit einem Computer verbunden ist, Erfassen, ob sich das Endgerät in einem sicheren bildschirmgesperrten Zustand befindet, wobei der sichere bildschirmgesperrte Zustand in einem Betriebssystem des Endgeräts voreingestellt ist, und der Bildschirm, der gesperrt ist, nur dann erfolgreich entsperrt werden kann, wenn ein Benutzer korrekte Entsperrinformationen auf dem Bildschirm eingibt; und
eine Steuereinheit (320), die mit der Erfassungseinheit verbunden und konfiguriert ist, um einen Debug-Port des Endgeräts zu steuern, wenn sich das Endgerät in dem sicheren bildschirmgesperrten Zustand 6 befindet, wobei, wenn sich das Endgerät in dem sicheren bildschirmgesperrten Zustand befindet, die Steuereinheit (320) ferner konfiguriert ist, um den Debug-Port zu deaktivieren, **dadurch gekennzeichnet, dass**
die Erfassungseinheit (310) ferner konfiguriert ist, um zu erfassen, ob der Bildschirm erfolgreich entsperrt wurde, nachdem der Benutzer korrekte Entsperrinformationen auf dem Bildschirm eingegeben hat; und
wenn der Bildschirm erfolgreich entsperrt wird, die Steuereinheit (320) ferner konfiguriert ist, um den Debug-Port zu aktivieren, oder
wenn der Bildschirm erfolglos entsperrt wird, nachdem der Benutzer falsche Entsperrinformationen auf dem Bildschirm eingibt, die Steuereinheit (320) ferner konfiguriert ist, um den Debug-Port zu deaktivieren, wobei die Steuereinheit (320) ferner zu Folgendem konfiguriert ist:
Erzeugen eines historischen Datensatzes des Debug-Ports gemäß einem aktivierten Zustand oder einem deaktivierten Zustand des Debug-Ports;
wobei
die Erfassungseinheit (310) ferner konfiguriert ist, um zu erfassen, ob der Port des universellen seriellen Busses von dem Computer getrennt ist; und
wenn der Port des universellen seriellen Busses von dem Computer getrennt ist, die Steuereinheit (320) ferner konfiguriert ist, um den historischen Datensatz des Debug-Ports zu löschen,
wenn der Port des universellen seriellen Busses mit dem Computer verbunden bleibt, die Steuereinheit (320) ferner konfiguriert ist, um zu erfassen, ob sich die Endgerät in einem bildschirmgesperrten Zustand befindet, und
wenn sich das Endgerät in dem bildschirmgesperrten Zustand befindet, die Steuereinheit (320) ferner konfiguriert ist, um den Debug-Port gemäß dem historischen Datensatz des Debug-Ports zu steuern.

## Revendications

1. Procédé de commande d'un port de débogage d'un dispositif terminal, comprenant :
la détection (S110) d'un état d'un port de bus série universel du dispositif terminal et d'un état d'un écran du dispositif terminal et la commande du port de débogage du dispositif terminal selon un résultat de détection ;
lorsque (S120) le port de bus série universel est connecté à un ordinateur, le fait de détecter si le dispositif terminal est dans un état de verrouillage d'écran sécurisé, dans lequel l'état de verrouillage d'écran sécurisé est prédéfini dans un système d'exploitation du dispositif terminal, et l'écran qui est verrouillé peut être déverrouillé avec succès uniquement après qu'un utilisateur a entré des informations de déverrouillage correctes sur l'écran ; et
la commande (S130) d'un port de débogage du dispositif terminal lorsque le dispositif terminal est dans l'état de verrouillage d'écran sécurisé, dans lequel la commande d'un port de débogage du dispositif terminal lorsque le dispositif terminal est dans l'état de verrouillage d'écran sécurisé comprend :
la désactivation du port de débogage lorsque le dispositif terminal est dans l'état de verrouillage d'écran sécurisé, dans lequel, après la désactivation du port de débogage lorsque le dispositif terminal est dans l'état de verrouillage d'écran sécurisé, le procédé est **caractérisé par** :
le fait de détecter si l'écran est déverrouillé avec succès après que l'utilisateur a entré des informations de déverrouillage correctes sur l'écran ; et
l'activation du port de débogage lorsque l'écran est déverrouillé avec succès, ou
la désactivation du port de débogage lorsque l'écran est déverrouillé sans succès après que l'utilisateur a entré des informations de déverrouillage incorrectes sur l'écran, dans lequel, après l'activation du port de débogage lorsque l'écran est déverrouillé avec succès ou la désactivation du port de débogage lorsque l'écran est déverrouillé sans succès, le procédé comprend :
la génération d'un enregistrement historique du port de débogage selon un état activé ou un état désactivé du port de débogage ;
dans lequel, après la génération d'un enregistrement historique du port de débogage, le procédé comprend :
le fait de détecter si le port de bus série universel est déconnecté de l'ordinateur ; et
l'effacement de l'enregistrement historique du port de débogage lorsque le port de bus série universel est déconnecté de l'ordinateur,
le fait de détecter si le dispositif terminal est dans un état de verrouillage d'écran lorsque le port de bus série universel reste connecté à l'ordinateur, et
la commande du port de débogage selon l'enregistrement historique du port de débogage lorsque le dispositif terminal est dans l'état de verrouillage d'écran.

2. Appareil pour commander un port de débogage d'un dispositif terminal, comprenant :
une unité de détection (310), configurée pour détecter un état d'un port de bus série universel d'un dispositif terminal et un état d'un écran du dispositif terminal et configurée pour commander le port de débogage du dispositif terminal selon un résultat de détection, dans lequel
l'unité de détection (310) est en outre configurée pour : lorsque le port de bus série universel est connecté à un ordinateur, détecter si le dispositif terminal est dans un état de verrouillage d'écran sécurisé, dans lequel l'état de verrouillage d'écran sécurisé est prédéfini dans un système d'exploitation du dispositif terminal, et l'écran qui est verrouillé peut être déverrouillé avec succès uniquement après qu'un utilisateur a entré des informations de déverrouillage correctes sur l'écran ; et
une unité de commande (320), connectée à l'unité de détection et configurée pour commander un port de débogage du dispositif terminal lorsque le dispositif terminal est dans l'état de verrouillage d'écran sécurisé 6, dans lequel, lorsque le dispositif terminal est dans l'état de verrouillage d'écran sécurisé, l'unité de commande (320) est en outre configurée pour désactiver le port de débogage, **caractérisé en ce que**
l'unité de détection (310) est en outre configurée pour détecter si l'écran est déverrouillé avec succès après que l'utilisateur a entré des informations de déverrouillage correctes sur l'écran ; et
lorsque l'écran est déverrouillé avec succès, l'unité de commande (320) est en outre configurée pour activer le port de débogage, ou
lorsque l'écran est déverrouillé sans succès après que l'utilisateur a entré des informations de déverrouillage incorrectes sur l'écran, l'unité de commande (320) est en outre configurée pour désactiver le port de débogage, dans lequel l'unité de commande (320) est en outre configurée pour :
générer un enregistrement historique du port de débogage selon un état activé ou un état désactivé du port de débogage ;
dans lequel
l'unité de détection (310) est en outre configurée pour détecter si le port de bus série universel est déconnecté de l'ordinateur ; et
lorsque le port de bus série universel est déconnecté de l'ordinateur, l'unité de commande (320) est en outre configurée pour effacer l'enregistrement historique du port de débogage,
lorsque le port de bus série universel reste connecté à l'ordinateur, l'unité de commande (320) est en outre configurée pour détecter si le dispositif terminal est dans un état de verrouillage d'écran, et
lorsque le dispositif terminal est dans l'état de verrouillage d'écran, l'unité de commande (320) est en outre configurée pour commander le port de débogage selon l'enregistrement historique du port de débogage.
